(19) **Europäisches Patentamt / European Patent Office / Office européen des brevets**

(11) **EP 1 752 507 A1**

(12) **EUROPEAN PATENT APPLICATION**

(43) Date of publication:
**14.02.2007 Bulletin 2007/07**

(51) Int Cl.:
*C09J 133/02* [(2006.01)]   *C09J 7/02* [(2006.01)]

(21) Application number: **06016534.7**

(22) Date of filing: **08.08.2006**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(30) Priority: **11.08.2005  JP 2005233265**

(71) Applicant: **NITTO DENKO CORPORATION
Ibaraki
Osaka, 567-8680 (JP)**

(72) Inventors:
• **Kontani, Tomohiro
Ibaraki
Osaka 567-8680 (JP)**
• **Yoshida, Yoshinori
Ibaraki
Osaka 567-8680 (JP)**
• **Shintani, Toshio
Ibaraki
Osaka 567-8680 (JP)**
• **Akazawa, Kouji
Ibaraki
Osaka 567-8680 (JP)**

(74) Representative: **Albrecht, Thomas et al
Kraus & Weisert
Patent- und Rechtsanwälte
Thomas-Wimmer-Ring 15
80539 München (DE)**

(54) **Pressure-sensitive adhesive sheet and process for preparing it**

(57)    To provide a pressure-sensitive adhesive sheet for use in processing wafers and the like articles, that produces less cutting sludge of the pressure-sensitive adhesive sheet and that can follow up unevenness of a wafer even when a difference in height of the unevenness is large, the pressure-sensitive adhesive sheet includes a base having on one surface thereof an intermediate layer and a pressure-sensitive adhesive layer in order, wherein the intermediate layer has an initial elastic modulus of 0.5 N/mm$^2$ or less, a loss tangent (tanδ) at 20°C to 70°C of 0.4 or more, and a gel fraction of 30% or more

EP 1 752 507 A1

**Description**

**BACKGROUND OF THE INVENTION**

Field of the Invention

The present invention relates to a pressure-sensitive adhesive sheet, in particular, to a pressure-sensitive adhesive sheet used in a process of high-precision processing of semiconductor products such as semiconductor wafers and optical products in order to hold or protect such products. Also, the present invention relates to a method of producing such a pressure-sensitive adhesive sheet and to a method of processing an article using such a pressure-sensitive adhesive sheet.

Description of Related Art

In some industrial fields such as optical industries and semiconductor industries, pressure-sensitive adhesive sheets are used in high-precision processing optical parts such as lenses or semiconductor articles such as semiconductor wafers in order to protect the surface of wafers and the like or prevent breakage thereof.

For example, the semiconductor chips are produced as follows. First a high-purity silicon single crystal or the like is sliced to form wafers. A predetermined circuit pattern such as IC is formed on the wafer by etching to incorporate an integrated circuit. Then, the wafer is passed through a back-grinding step in which the back side of the wafer is ground, and finally, the wafer is diced into chips, alternatively, the wafer is diced in advance in the pre-dicing step, and then the back side of the wafer is ground to obtain a semiconductor chip. Since the semiconductor wafer in itself is thin and brittle and the circuit pattern is uneven, the wafer tends to be broken if external force is applied to the wafer when it is transported to the steps of back-grinding and dicing. In the back-grinding step, grinding is performed while washing the backside of the wafer with purified water in order to remove the resultant grinding sludge or remove heat generated during the grinding, and it is necessary to prevent pollution caused by such water with grinding sludge. Consequently, to protect, for example, the circuit pattern surface and prevent breakage of the semiconductor wafer, it has been widely practiced to apply a pressure-sensitive adhesive sheet on the circuit pattern surface of the wafer before the operation can be performed. Further, when dicing, a pressure-sensitive adhesive sheet is applied to the back side of the wafer and the wafer is diced in a glued and fixed state to form a chip. Then, the chip with the base is then raised by picking the base side with a needle and the raised chip is transferred and fixed onto a die pad. As examples of known pressure-sensitive adhesive sheet used here, Japanese Patent Application Laid-open No. Sho 61-10242 discloses a film used in processing silicon wafers that includes a base material sheet with a Shore Hardness D of 40 or less having provided on a surface thereof a pressure-sensitive adhesive layer. Further, Japanese Patent Application Laid-open No. Sho 61-260629 discloses a film used in processing silicon wafers that includes a base film with a Shore Hardness D of 40 or less having laminated an auxiliary film with a Shore Hardness D of more than 40 on one surface thereof and a pressure-sensitive adhesive layer on the other surface thereof.

However, in recent years, differences in height of unevenness of a surface of a semiconductor wafer on which patterns are provided are increasing; for example, wafers with a polyimide film thereon has a difference in height of unevenness on the order of 1 to 20 $\mu$m. Further, bad marks for the recognition of defect semiconductor chips have unevenness with a difference in height on the order of 10 to 70 $\mu$m and bumps formed on patterned electrodes have a height on the order of 20 to 250 $\mu$m. Accordingly, when a conventional pressure-sensitive adhesive sheet is used, the pressure-sensitive adhesive sheet can not follow up such unevenness so that the adhesion between the pressure-sensitive adhesive layer and the surface of the wafer becomes insufficient. As a result, when the wafer is processed, peeling of the sheet or penetration of polishing water, foreign matter into the pattern surface occurs, or errors in processing, generation of dimples, or chip scattering, which is the phenomenon that the cut chips scatter, occurs. Further, in some cases, wafers are broken.

For example, Japanese Patent Application Laid-open No. 2001-203255 discloses a pressure-sensitive adhesive sheet for holding and protecting a semiconductor wafer, having an intermediate layer with a specified elastic modulus and a specified gel fraction. In the case of semiconductor wafers with unevenness whose difference in height is large, however, it is necessary for the intermediate layer to have a larger thickness in order to absorb or compensate for such large difference in height of unevenness.

However, pressure-sensitive adhesive sheet in which the intermediate layer has a large thickness has a problem. That is, the back-grinding process entails a step of cutting a pressure-sensitive adhesive sheet along the periphery of a wafer with a cutter blade after the pressure-sensitive adhesive sheet is affixed to the pattern surface of the wafer, and then the cutter blade is heated in advance to elevate the temperature of the cutter blade to facilitate cutting. Usually, the tip portion of the cutter blade is heated to a temperature of 20°C to 70°C. Therefore, when the pressure-sensitive adhesive sheet is cut along the periphery of the wafer after the pressure-sensitive adhesive sheet is affixed to the wafer, the intermediate layer will get out of the cut side to form a mass (cutting sludge) when the intermediate layer is thick.

The present invention has been made with a view to solve the above-mentioned problem. Therefore, it is an object of the present invention to provide a pressure-sensitive adhesive sheet that can follow up unevenness of a semiconductor wafer surface even when a difference in height of the unevenness is large and that produces less cutting sludge of the pressure-sensitive adhesive sheet when the pressure-sensitive adhesive sheet is affixed to a surface of the semiconductor wafer and cut off. Another object of the present invention is to provide a method of producing such a pressure-sensitive adhesive sheet and a method of processing an article using such a pressure-sensitive adhesive sheet.

## SUMMARY OF THE INVENTION

The present invention provides a pressure-sensitive adhesive sheet with a base material having on one surface thereof an intermediate layer and a pressure-sensitive adhesive sheet in order, wherein the intermediate layer has an initial elastic modulus of 0. 5 N/mm$^2$ or less, a loss tangent (tan$\delta$) at 20°C to 70°C of 0.4 or more, and a gel fraction of 30% or more.

Here, it is preferable that the intermediate layer is formed by using an acrylic-based polymer.

Further, it is preferable that the intermediate layer is formed by irradiating radiation.

In the present invention, the dose of the radiation, e.g. , ultraviolet ray is 100 mJ/cm$^2$ or more and 5,000 mJ/cm$^2$ or less.

In the present invention, it is preferable that the pressure-sensitive adhesive layer is formed by using a radiation curable-type acrylic polymer having a carbon-carbon double bond in the molecule thereof.

Further, it is preferable that the pressure-sensitive adhesive sheet has a ratio (t1/t2) of the thickness of the intermediate layer (t1) and the thickness of the pressure-sensitive adhesive layer (t2) of 0.01 or more and 0.5 or less.

In the present invention, it is preferable that the pressure-sensitive adhesive sheet can include a release separator on the pressure-sensitive adhesive layer.

The pressure-sensitive adhesive sheet can be used in processing semiconductor wafers. The pressure-sensitive adhesive sheet for processing semiconductor wafers is used for holding and/or protecting an article in a process of precision processing semiconductor wafers.

The method of producing a pressure-sensitive adhesive sheet according to the present invention includes coating a mixture containing a radical polymerizable monomer on one surface of a base, irradiating radiation to the coated mixture to cure it to form an intermediate layer having an initial elastic modulus of 0.5 N/mm$^2$ or less, a loss tangent (tan$\delta$) at 20°C to 70°C of 0.4 or more, and a gel fraction of 30% or more, and forming a pressure-sensitive adhesive layer on the intermediate layer.

Here, the radical polymerizable monomer is preferably an acrylic-based monomer.

The method of using pressure-sensitive adhesive sheet of the present invention includes affixing any one of the above-mentioned pressure-sensitive adhesive sheets to an article to be precision processed to hold and/or protect the article, and then precision processing the article in a held and/or protected state.

## BRIEF DESCRIPTION OF THE DRAWINGS

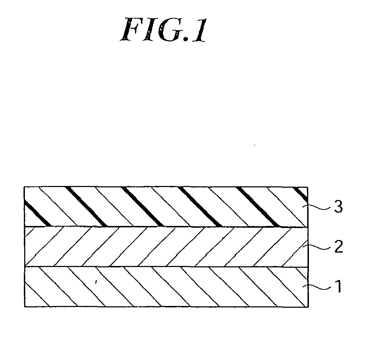

Fig. 1 is a cross-sectional view schematically showing a pressure-sensitive adhesive sheet according to a first embodiment of the present invention.

## DETAILED DESCRIPTION

Hereinafter, the present invention is explained in detail.

The pressure-sensitive adhesive sheet of the present invention includes a base, an intermediate layer, and a pressure-sensitive adhesive layer in order. The intermediate layer has an initial elastic modulus of 0.5 N/mm$^2$ or less, a loss tangent (tan$\delta$) at 20°C to 70°C of 0.4 or more, and a gel fraction of 30% or more.

When the initial elastic modulus of the intermediate layer is above 0.5 N/mm$^2$, the pressure-sensitive adhesive sheet can not follow up sufficiently the unevenness on the surface of the semiconductor wafer, so that the semiconductor wafer tends to be broken or dimples tend to occur during the grinding.

In the present invention, the initial elastic modulus can be obtained as follows. That is, a test sample (intermediate layer) prepared so as to have a cross-section of 1 mm$^2$ and a length of 10 mm is subjected to a tensile test under condition of a rate of pulling of 300 mm/minute using a tensile testing machine (Autograph AGS-50D, manufactured by Shimadzu Corporation) to prepare a stress-strain curve. From the initial linear portion of the stress-strain curve, an initial elastic modulus is obtained according to the following equation. Here, stress at break is defined as strength at break and strain (elongation) at break is defined as elongation at break. The term "elongation at break" means elongation required to break the film.

$$\text{Initial elastic modulus} = (F/A)/(\Delta L/L_0)$$

wherein F represents tensile stress, A represents cross-section of a test sample, $\Delta L$ represents an amount of change of strain (elongation), and $L_0$ represents an initial length of the test sample (length before the test).

In the present invention, it is necessary that the intermediate layer has a loss tangent (tan$\delta$) at 20°C to 70°C of 0.4 or more. If the loss tangent (tan$\delta$) is less than 0.4, the efficiency of conversion into heat energy is deteriorated, so that a large amount of cutting sludge occurs when the pressure-sensitive adhesive sheet is cut along the periphery of the semiconductor wafer.

Although the relationship between loss tangent (tan$\delta$) and "cutting sludge" is not fully clarified, the cutting sludge is formed by the force (vibrational energy) transferred from the cutter blade when the pressure-sensitive adhesive sheet is cut along the periphery of the wafer and it is supposed that in the pressure-sensitive adhesive sheet, which has an intermediate layer having a large value of loss tangent (tan$\delta$), vibrational energy is efficiently converted into heat energy due to intermolecular friction and is absorbed, resulting in a decrease in the amount of cutting sludge.

In the present invention, the term "loss tangent (tan$\delta$)" refers to a ratio of loss elastic modulus to storage elastic modulus and shows different values for different materials and different temperatures. The loss tangent (tan$\delta$) can be obtained by the following measuring method. That is, in a dynamic viscoelasticity measuring apparatus ARES manufactured by Rheometrics Co. , a test sample having a thickness of about 2.0 mm is set to parallel plates having a diameter of 7.9 mm with a jig and loss tangent (tan$\delta$) of the test sample is determined at a frequency of 1 Hz and under the condition of a temperature elevation rate of 5°C/min.

As described above, the pressure-sensitive adhesive sheet of the present invention has a gel fraction of 30% or more. If the gel fraction of the intermediate layer is less than 30%, the bearing properties of the intermediate layer is decreased so that the intermediate layer protrudes from the side surface thereof, with the result that a large amount of cutting sludge is formed when the pressure-sensitive adhesive sheet is cut along the periphery of the semiconductor wafer.

In the present invention, the term "gel fraction" refers to a ratio (in %) of the amount of a residual polymer that remains in after the target polymer to be measured is immersed in a solvent for a predetermined period to the initial amount of the polymer. The gel fraction can be obtained from the amount of a test sample (intermediate layer) that remains undissolved in ethyl acetate when it has been dissolved in ethyl acetate at 25°C for 7 days.

Preferably, the intermediate layer that constitutes the pressure-sensitive adhesive sheet of the present invention is formed by irradiating radiation to a mixture that contains a radical-polymerizable monomer to cure it.

Those monomers that have a radical-polymerizable unsaturated double bond, such as vinyl-based monomers can be used as the radical-polymerizable monomers. From the view points of good reactivity, good adhesion with the pressure-sensitive adhesive layer (anchoring property) and ease of adjustment of elastic modulus and so on, the vinyl-based monomer is preferably an acrylic-based monomer. Note that in the present invention, the term "film" as used herein also refers to a sheet and the term "sheet" as used herein also refers to a film.

Examples of the acrylic-based monomer that can be preferably used in the present invention include (meth) acrylic acid, methyl (meth)acrylate, ethyl (meth)acrylate, propyl (meth)acrylate, butyl (meth)acrylate, pentyl (meth)acrylate, hexyl (meth)acrylate, 2-ethylhexyl (meth)acrylate, octyl (meth)acrylate, isooctyl(meth)acrylate, nonyl(meth)acrylate, isononyl (meth)acrylate, lauryl (meth)acrylate, isobornyl (meth)acrylate, 2-hydroxyethyl (meth)acrylate, 4-hydroxybutyl (meth)acrylate, and 6-hydroxyhexyl (meth)acrylate.

Further, monomers such as vinyl acetate, vinyl propionate, styrene, acrylamide, methacrylamide, mono- or diesters of maleic acid and derivatives thereof, N-methylolacrylamide, glycidyl acrylate, glycidyl methacrylate, N,N-dimethylaminoethyl acrylate, N,N-dimethylaminopropylmethacrylamide, 2-hydroxypropyl acrylate, acryloylmorpholine, N,N-dimethylacrylamide, N,N-diethylacrylamide, imide acrylate, N-vinylpyrrolidone, oligoester acrylate, and ε-caprolactone acrylate may be copolymerized. The kind and amount of the copolymerizable monomers can be determined as appropriate taking into consideration the properties of the resultant intermediate layer.

In the present invention, a polyfunctional monomer such as trimethylolpropane triacrylate or dipentaerythritol hexaacrylate may be used as a crosslinking agent as necessary. With the blending amount of the crosslinking agent, the gel fraction can be adjusted.

The kind, combination and amount to be used of the radical polymerizable monomers can be determined as appropriate taking into consideration polymerizability upon curing with light such as radiation, and characteristics of the resultant high polymer.

The mixture that contains the vinyl-based monomer preferably contains a photo polymerization initiator. Examples of the photo polymerization initiator that can be used include benzoin ethers such as benzoin methyl ether and benzoin isopropyl ether; substituted benzoin ethers such as anisole methyl ether; substituted acetophenones such as 2,2-diethoxyacetophenone and 2,2-dimethoxy-2-phenylacetophenone; substituted $\alpha$-ketols such as 1-hydroxycyclohexyl phenyl ketone and 2-methyl-2-hydroxypropiophenone; aromatic sulfonyl chlorides such as 2-naphthalenesulfonyl chloride; optically active oximes such as 1-phenyl-1,1-propanedione-2-(o-ethoxycarbonyl)oxime.

The intermediate layer may contain commonly used additives, for example, antioxidants,fillers,pigments,colorants,flame retardants, antistatic agents, and ultraviolet absorbents as necessary as far as they do not deteriorate the effects of the present invention. The additives may be used in amounts usually used depending on their kind.

In the present invention, as described above, for example, the mixture containing the vinyl-based monomer is coated on a base or a release-treated sheet (a so-called release sheet or a separator), and cured by irradiating ionized radiation such as $\alpha$-ray, $\beta$-ray, $\gamma$-ray, neutron beam, or electron beam, radiation such as ultraviolet ray, or visible light depending on the kind of the photo polymerization initiator used to form an intermediate layer.

In this case, to avoid inhibition of polymerization due to oxygen, a release-treated sheet may be covered over the mixture containing the vinyl-based monomer coated on the base material to shut out oxygen. Alternatively, the base may be placed in a vessel filled with an inert gas to decrease the concentration of oxygen in the atmosphere.

In the present invention, the kind of radiation and so on and the kind and the like of the lamp to be used for irradiation may be selected as appropriate, and low pressure lamps such as a fluorescent chemical lamp, a black light, and a bactericidal lamp as well as high pressure lamps such as a metal halide lamp and a high pressure mercury lamp can be used.

The dose of ultraviolet ray and the like may be set arbitrarily depending on the required characteristics of the film. Generally, the dose of ultraviolet ray is 100 to 5,000 mJ/cm$^2$, preferably 1,000 to 4,000 mJ/cm$^2$, and more preferably 2,000 to 3,000 mJ/cm$^2$. When the dose of ultraviolet ray is less than 100 mJ/cm$^2$, no sufficient polymerization degree can be obtained, while a dose of ultraviolet ray more than 5,000 mJ/cm$^2$ may cause deterioration of the resultant cured film.

Further, the temperature at which ultraviolet ray is irradiated is not particularly limited and may be set arbitrarily. When the temperature is too high, a stop polymerization -reaction tends to occur, resulting in a decrease in the characteristics. Usually, the irradiation temperature is 70°C or less, preferably 50°C or less, and more preferably 30°C or less.

In the present invention, the intermediate layer may be constituted by a single layer or it may be of a multi-layer structure. In the case of the multi-layer structure, the respective layers that constitute the intermediate layer may be the same or different.

The thickness of the intermediate layer is preferably selected as appropriate as far as the height of the unevenness on the surface of the wafer, property of holding the wafer, and the property of protecting the wafer are not deteriorated. For example, the thickness of the intermediate layer is preferably 20 $\mu$m to 500 $\mu$m, more preferably on the order of 30 $\mu$m to 200 $\mu$m. If the thickness of the intermediate layer is less than 20 $\mu$m, sometimes the pressure-sensitive adhesive sheet can not sufficiently follow up the unevenness of the pattern surface of the wafer, so that cracks or dimples may occur during grinding processing of wafers. On the other hand, if the thickness of the intermediate layer is more than 500 $\mu$m, it takes a long time for the pressure-sensitive adhesive sheet to be affixed onto the wafer, thus decreasing the working efficiency or sometimes it happens that the affixed wafer can not be placed in the grinding processor. Further, when the pressure-sensitive adhesive sheet is released from the wafer, the wafer that has been thinned after the grinding tends to be broken due to bending stress.

The base that constitutes the pressure-sensitive adhesive sheet of the present invention is preferably one that has a value of loss tangent (tan$\delta$) at 32°C of 0.1 or less. Examples of the material that constitutes the base include polyester-based resins such as polyethylene terephthalate (PET); polyolefin-based resins such as polyethylene (PE) and polypropylene (PP); thermoplastic resins such as polyimides (PI), polyether ether ketone (PEEK), polyvinyl chloride-based resins such as polyvinyl chloride (PVC), polyvinylidene chloride-based resins, polyamide-based resins, polystyrene-based resins, fluorine-contained-based resins, cellulose-based resins, and polycarbonate-based resins; and in addition thermosetting resins, metal foils, paper and so on. It is preferable that the material of the base is determined as appropriate depending on the purpose, the kind of the pressure-sensitive adhesive layer that is provided as necessary. For example, when an ultraviolet ray-curing type pressure-sensitive adhesive is provided, a base having high ultraviolet transmission is preferable.

The material that constitutes the base may contain generally used additives as necessary as far as the effects of the present invention are not deteriorated. Examples of such additives include antioxidants, fillers, pigments, colorants, flame retardants, antistatic agents, and ultraviolet absorbents.

The base may be either of a single layer structure or a laminate consisting of two or more layers. When the base is a laminate that consists of two or more layers, the respective constituent layer may be made of either the same composition material or different composition material.

The pressure-sensitive adhesive sheet of the present invention has a pressure-sensitive adhesive layer on the intermediate layer. Preferably, the pressure-sensitive adhesive layer has adhesion such that when an article such as a semiconductor wafer is processed, the pressure-sensitive adhesive layer can have a suitable adhesion so that it can securely hold the wafer and after the processing, it can be readily released from the article without any load thereon.

The composition of pressure-sensitive adhesive that constitutes such a pressure-sensitive adhesive layer is not particularly limited and known pressure-sensitive adhesives used for bonding and fixing semiconductor wafers and so on can be used. For example, rubber-based pressure-sensitive adhesives that contain a rubber-based polymer such as natural rubber or styrene-based copolymer as a base polymer, acrylic-based pressure-sensitive adhesives, silicone-based pressure-sensitive adhesives, polyvinyl ether-based pressure-sensitive adhesives and so on can be used. Among these, acrylic-based pressure-sensitive adhesives that contain acrylic-based polymers as a base polymer are preferable from the viewpoints of ease of adjustment of adhesion to semiconductor wafers, washability of the semiconductor wafers after the peeling with super pure water or organic solvents such as alcohols.

The base polymers that constitute the pressure-sensitive adhesives may have a crosslinked structure. Such polymers can be obtained by polymerizing a monomer mixture containing a monomer (for example, an acryl-based monomer) that has a functional group such as a carboxyl group, a hydroxyl group, an epoxy group, or an amino group in the presence of a crosslinking agent. The pressure-sensitive adhesive sheet provided with a pressure-sensitive adhesive layer that contains a polymer having a crosslinked structure has increased self-supporting property, so that deformation of the pressure-sensitive adhesive sheet can be prevented and the pressure-sensitive adhesive sheet can be maintained in a flat state. Therefore, use of this pressure-sensitive adhesive sheet makes it possible to affix the pressure-sensitive adhesive sheet onto wafers precisely and easily by using an automatic affixing apparatus or the like.

Preferably a radiation curing-type pressure-sensitive adhesive is used as the pressure-sensitive adhesive that constitute the pressure-sensitive adhesive layer. The radiation curing-type pressure-sensitive adhesive can be obtained, for example, by blending the pressure-sensitive adhesive substance with an oligomer component that cures upon irradiation of radiation to form a low adhesive substance. With the pressure-sensitive adhesive layer formed from the radiation curing-type pressure-sensitive adhesive, the pressure-sensitive adhesive sheet can be readily affixed due to the oligomer component, which imparts the pressure-sensitive adhesive with plastic flowability, while when the sheet is to be peeled off, irradiation of radiation results in formation of a low adhesive substance, which facilitates peeling of the pressure-sensitive adhesive sheet from the articles such as semiconductor wafers. Examples of the radiation that is used to cure the pressure-sensitive adhesive layer include X ray, electron beam, ultraviolet ray, and so on. Because of easy handling, it is preferable that ultraviolet ray be used. However, the present invention should not be construed as being limited thereto.

The radiation curing-type pressure-sensitive adhesives are preferably those pressure-sensitive adhesives that include an acrylic-based polymer having a carbon-carbon double bond in the molecule taking into consideration ease of design of molecules.

The acrylic-based polymers include those acrylic-based polymers obtained by providing as monomer components one or more of an alkyl (meth)acrylate ester having 30 carbon atoms or less, particularly 4 to 18 carbon atoms in the alkyl group moiety (for example, linear or branched), such as a methyl group, an ethyl group, a propyl group, an isopropyl group, a n-butyl group, a t-butyl group, an isobutyl group, an amyl group, an isoamyl group, a hexyl group, a heptyl group, a cyclohexyl group, a 2-ethylhexyl group, an octyl group, an isooctyl group, a nonyl group, an isononyl group, a decyl group, an isodecyl group, an undecyl group, a lauryl group, a tridecyl group, a tetradecyl group, a stearyl group, an octadecyl group, and a dodecyl group, and one or more of a cycloalkyl (meth) acrylate (for example, cyclopentyl, cyclohexyl, etc. (meth)acrylates) and polymerizing these monomer components. Note that the term "(meth)acrylates" refer to acrylates and/or methacrylates. The term "(meth)" as used herein for all the occurrences shall be understood similarly.

To improve adhesion by introduction of a functional group or a polar group, or to improve cohesion, heat resistance and the like properties by controlling the glass transition temperature of the copolymer, the acrylic-based polymer may contain a unit that corresponds to other monomer component copolymerizable with the alkyl (meth)acrylate or cycloalkyl ester. Examples of such a monomer component include carboxylic group-containing monomers such as acrylic acid, methacrylic acid, carboxyethyl (meth)acrylate, carboxypentyl (meth)acrylate, itaconic acid, maleic acid, fumaric acid, and crotonic acid; acid anhydride monomers such as maleic anhydride and itaconic anhydride; hydroxyl group-containing monomers such as 2-hydroxylethyl (meth)acrylate, 2-hydroxypropyl (meth)acrylate, 4-hydroxybutyl (meth)acrylate, 6-hydroxyhexyl(meth)acrylate, 8-hydroxyoctyl(meth)acrylate, 10-hydroxydecyl (meth)acrylate, 12-hydroxylauryl (meth)acrylate, and (4-hydroxymethylcyclohexyl)methyl (meth)acrylate; sulfonate group-containing monomers such as styrenesulfonic acid, allyl sulfonate, 2-(meth)acrylamide-2-methylpropanesulfonate, (meth)acrylamidepropanesulfonic acid, sulfopropyl (meth)acrylate, and (meth)acryloyloxynaphthalenesulfonate; phosphate group-containing monomers such as 2-hydroxyethylacryloyl phosphate; acrylamide, and acrylonitrile.

These copolymerizable monomer components can be used singly or two or more of them can be used in combination. The amounts of the copolymerizable monomers are as follows. For example, the ratio of alkyl (meth) acrylate as the main component to the other monomer that is copolymerizable therewith is preferably 70 to 100% by weight, more preferably 85 to 95% by weight of the alkyl (meth)acrylate and preferably 30 to 0% by weight, more preferably 15 to 5% by weight of the other copolymerizable monomer, with % by weight being based on the total monomer components. By blending 70% by weight or more of the alkyl (meth)acrylate and 30% by weight or less of the other copolymerizable monomer, the adhesion, cohesion and so on of the resultant copolymer can be well balanced.

Further, the acrylic-based polymer may contain a polyfunctional monomer for crosslinking. Examples of the polyfunctional monomer include hexanediol di(meth)acrylate, (poly)ethylene glycol di(meth)acrylate, (poly)propylene glycol di(meth)acrylate, neopentyl glycol di(meth)acrylate, pentaerythritol di(meth)acrylate, trimethylolpropane tri(meth) acrylate, pentaerythritol tri(meth)acrylate, dipentaerythritol hexa(meth)acrylate, epoxy(meth)acrylate, polyester(meth) acrylate, and urethane(meth)acrylate. Also, these polyfunctional monomers can be used singly or two or more of them can be used in combination. The amount of the polyfunctional monomer to be used is preferably 30% by weight or less based on the total monomer components from the viewpoint of adhesive properties.

The polymerization method for forming the acrylic-based polymer may be any of a solution polymerization method, an emulsion polymerization method, a mass polymerization method, a suspension polymerization method and so on. The pressure-sensitive adhesive layer preferably contains a smaller amount of low molecular weight substances in order not to contaminate the affixing surface of the articles such as semiconductor wafers. From this viewpoint, the acrylic-based polymer has a weight-average molecular weight on the order of, preferably 200,000 to 300,000, more preferably 250,000 to 1,500,000.

The method for introducing a carbon-carbon double bond into an acrylic-based polymer as a basic skeleton is not particularly limited and various methods may be adopted. In the present invention, it is preferable that the carbon-carbon double bond is introduced into side chain of the acrylic-based polymer to form a base polymer having a carbon-carbon double bond. Specifically, the carbon-carbon double bond can be introduced, for example, by preliminarily copolymerizing an acrylic-based polymer with a monomer having a first functional group, and then reacting the resultant polymer with a compound having a carbon-carbon double bond and a second functional group that can react with the first functional group by condensation or addition reaction such that the radiation curability of the carbon-carbon double bond is maintained to introduce the carbon-carbon double bond into the side chain of the acrylic-based polymer.

Examples of combination of the functional group of a monomer to be copolymerized with the acrylic-based polymer and a functional group that can react with the functional group of the monomer are presented below. Such combinations include, for example, a carboxylate group and an epoxy group, a carboxylate group and an aziridyl group, a hydroxyl group and an isocyanate group, and so on. Among the combinations of functional groups, the combination of a hydroxyl group and an isocyanate group is preferable in view of ease of tracing the reaction. Further, in the presented combinations, any of the functional groups in the combination may be present on the acrylic-based polymer. For example, in the combination of a hydroxyl group and an isocyanate group, it is preferable that the acrylic-based polymer has a hydroxyl group and the compound having a functional group that can react with the functional group of the monomer has an isocyanate group. In this case, examples of the compound having an isocyanate group include methacryloyl isocyanate, 2-methacryloyloxyethyl isocyanate, m-isopropenyl-$\alpha,\alpha$-dimethylbenzyl isocyanate, and so on. Examples of the acrylic-based polymer having a functional group (here, a hydroxyl group) include hydroxyl group-containing monomers such as 2-hydroxylethyl (meth)acrylate, 2-hydroxypropyl (meth)acrylate, 4-hydroxybutyl (meth)acrylate, 6-hydroxyhexyl (meth)acrylate, hydroxyl group-containing monomers having a ester linkage in the molecule thereof, and, 2-hydroxyethyl vinyl ether-based compounds, 4-hydroxybutyl vinyl ether-based compounds, and diethylene glycol monovinyl ether-based compounds.

The radiation curing-type pressure-sensitive adhesives may contain the base polymers having a carbon-carbon double bond singly. However, the radiation curing-type oligomer components may be blended as far as they do not deteriorate the characteristics of the resultant pressure-sensitive adhesives.

The radiation curing-type oligomer components include various oligomers such as urethane-based oligomers, polyether-based oligomers, polyester-based oligomers, polycarbonate-based oligomers, polybutadiene-based oligomers. In the present invention, these may be used in combination.

In the case of pressure-sensitive adhesives in which the radiation-curing type oligomer components are blended, migration of the oligomer components may occur during the storage of the pressure-sensitive adhesive tape so that changes due to storage tends to appear. Therefore, the amount of the oligomer component to be blended is usually 30 parts by weight or less, preferably 0 to 10 parts by weight, based on 100 parts by weight of the base polymer.

The above-mentioned radiation curing-type pressure-sensitive adhesives contain an photo polymerization initiator when they are cured with radiation such as ultraviolet ray. Examples of the photo polymerization initiator include $\alpha$-ketol based compounds such as 4-(2-hydroxyethoxy)phenyl (2-hydroxy-2-propyl) ketone, $\alpha$-hydroxy-$\alpha,\alpha'$-dimethylacetophenone, 2-methyl-2-hydroxypropiophenone, and 1-hydroxycyclohexyl phenyl ketone; acetophenone-based compounds such as methoxyacetophenone, 2,2-dimethoxy-2-phenylacetophenone-1, 2,2-diethoxyacetophenone, and 2-methyl-1-[4-(methylthio)-phenyl]-2-morpholinopropane; benzoin ether-based compounds such as benzoin ethyl ether, benzoin isopropyl ether, and anisoin methyl ether; ketal-based compounds such as benzyl dimethyl ketal; aromatic sulfonyl chloride-based compounds such as 2-naphthalenesulfonyl chloride; optically active oxime compounds such as 1-phenone-1,1-propanedione-2-(o-ethoxycarbonyl)oxime; benzophenone-based compounds such as benzophenone, benzoyl benzoate, and 3,3'-dimethyl-4-methoxybenzophenone; thioxanthone-based compounds such as thioxanthone, 2-chlorothioxanthone, 2-methylthioxanthone, 2,4-dimethylthioxanthone, isopropylthioxanthone, 2,4-dichlorothioxanthone, 2,4-diethylthioxanthone, and 2,4-diisopropylthioxanthone; camphorquinone, halogenated ketones, acylphosphinoxides, and acyl phosphonates.

The amount of the photo polymerization initiator to be blended is, for example, about 1 to about 10 parts by weight, preferably about 3 to about 5 parts by weight based on 100 parts by weight of the base polymer such as the acrylic-based polymer that constitute the pressure-sensitive adhesive.

The radiation-curing type pressure-sensitive adhesives of the present invention that can be used include, for example, epoxy-based crosslinking agents, aziridine-based crosslinking agents, and polyisocyanate-based crosslinking agents.

The pressure-sensitive adhesive layer may contain a component that foams or expand upon heating. Examples of the thermal foaming or expanding component include thermally expandable microspheres and so on that include a substance, for example, such as isobutane and propane, that can be easily gasified by heating in a resilient shell. "Microsphere", trade name for a product manufactured by Matsumoto Yushi Seiyaku Co. , Ltd. is commercially available example of the thermally expandable microsphere. The thermally foamable component or thermally expandable component contained in the pressure-sensitive adhesive layer enables the pressure-sensitive adhesive layer to expand by heat treatment after the grinding of wafers to considerably decrease adhesion area between the pressure-sensitive adhesive layer and the wafer, so that the pressure-sensitive adhesive sheet can be easily released from the wafer.

In the present invention, the elastic modulus of the pressure-sensitive adhesive layer can be set as appropriate as far as the adhesion and holding to the wafer is not deteriorated and preferably is 10 to 1,000 kPa. If the elastic modulus of the pressure-sensitive adhesive layer is less than 10 kPa, the pressure-sensitive adhesive layer becomes flexible so that there is the fear that the holding and protecting of the wafer is decreased. On the other hand, if the elastic modulus of the pressure-sensitive adhesive layer is more than 1,000 kPa, sometimes initial adhesion can not be obtained.

The thicknesses of the pressure-sensitive adhesive layer can be set as appropriate as far as the holding and protection of the wafer is not deteriorated. The thickness of the pressure-sensitive adhesive layer is preferably 1 to 100 $\mu$m, more preferably on the order of 2 to 60 $\mu$m. If the thickness of the pressure-sensitive adhesive layer is less than 1 $\mu$m, there is the fear of protrusion of the intermediate layer due to the breakage of the pressure-sensitive adhesive layer. On the other hand, if the thickness of the pressure-sensitive adhesive layer is more than 100 $\mu$m, it is difficult for the pressure-sensitive adhesive sheet to follow up the unevenness on the surface of the wafer when the pressure-sensitive adhesive sheet is affixed to the wafer.

In the present invention, the pressure-sensitive adhesive layer may be formed by coating the above-mentioned pressure-sensitive adhesive optionally using a solvent and so on directly on the intermediate layer. Alternatively, it may be formed by coating the pressure-sensitive adhesive on a release liner or the like to form a pressure-sensitive adhesive layer in advance and then applying the pressure-sensitive adhesive layer to the intermediate layer.

The ratio (t1/t2) of the thickness of the intermediate layer (t1) to the thickness of the pressure-sensitive adhesive layer (t2) in the pressure-sensitive adhesive sheet of the present invention can be selected as appropriate depending on the purpose and so on. In particular, when the pressure-sensitive adhesive sheet is used for processing high-precision components, the thickness ratio (t2/t1) of the thickness of the intermediate layer to the thickness of the pressure-sensitive adhesive layer is preferably t2/t1=0.01 to 0.5, more preferably about 0.02 to about 0.3. If the thickness ratio (t2/t1) is less than 0.1, the adhesion is not sometimes sufficiently decreased after the irradiation of radiation, so that release of the pressure-sensitive adhesive sheet becomes sometimes difficult. On the other hand, if the thickness ratio (t2/t1) is above 0.5, the effect of the intermediate layer is not exhibited so that followability of the pressure-sensitive adhesive sheet to the unevenness of the pattern surface of the wafer is difficult to obtain and cracks and dimples tend to occur upon grinding wafers.

Hereinafter, an example of an embodiment of the pressure-sensitive adhesive sheet according to the present invention is explained with reference to the attached drawing. In Fig. 1, on a base 1 are provided an intermediate layer 2 and a pressure-sensitive adhesive layer 3. Note that the base 1 may be a two-layer or more laminate and also the intermediate layer 2 may be a two-layer ormore laminate . Further, a separator (not shown in Fig. 1) for releasing may be provided on the pressure-sensitive adhesive layer 3 and other layers may be provided between the base 1 and the intermediate layer 2, and/or the intermediate layer 2 and the pressure-sensitive adhesive layer 3 as necessary.

The pressure-sensitive adhesive sheet of the present invention is used according to a conventional method that is used when articles, for example, wafers are processed. Here, an example case is presented where the pressure-sensitive adhesive sheet is used for grinding the backside of a semiconductor wafer. In this case, first a semiconductor wafer is mounted on a table such that a pattern surface, i. e. , a surface on which a pattern such as IC circuitry is provided is up and the pressure-sensitive adhesive sheet of the present invention is superimposed on the pattern surface such that the pressure-sensitive adhesive layer side contacts the pattern surface. Then, the pressure-sensitive adhesive sheet is affixed by pressing it by press means such as a press roll. Alternatively, the semiconductor wafer and the pressure-sensitive adhesive sheet are placed in a compressible vessel (for example, an autoclave) as superimposed in the above-mentioned manner and then the inner pressure of the vessel is increased to have the semiconductor wafer and the pressure-sensitive adhesive sheet affixed to each other. A press means may be used in combination. Alternatively, the semiconductor wafer and the pressure-sensitive adhesive sheet can be affixed to each other in a vacuum chamber. The pressure-sensitive adhesive sheet can be affixed to the semiconductor wafer by heating the pressure-sensitive adhesive sheet to a temperature equal to or less than the melting point of the material of the base of the pressure-sensitive adhesive sheet.

The method for polishing the backside of a semiconductor wafer is performed by a conventional polishing method. For example, a semiconductor wafer onto which a pressure-sensitive adhesive sheet is affixed in the above-mentioned manner is mounted on a polisher (back grinder) used as a processing machine for polishing and the backside of the wafer is polished to a desired thickness using a CMP (Chemical Mechanical Polishing) pad and so on. When a pressure-sensitive adhesive sheet of which the pressure-sensitive adhesive layer is formed from the radiation curing-type pressure-sensitive adhesive, radiation is irradiated to the pressure-sensitive adhesive sheet after the polishing is finished to decrease the adhesive strength of the pressure-sensitive adhesive layer before the pressure-sensitive adhesive sheet can be peeled off from the wafer.

EXAMPLES

Hereinafter, the present invention is explained by examples. However, the present invention is not limited thereto. In the following examples, all parts are parts by weight.

(Example 1)

In a reactor equipped with a condenser, a thermometer, and an agitator were charged 100 parts of 2-ethylheyxl acrylate and 10 parts of acrylic acid as acrylic monomers, and 0.35 parts of 1-hydroxycyclohexyl phenyl ketone (registered trademark "IRGACURE 184," manufactured by Ciba Specialty Chemicals Co., Ltd.) and 0.35 parts of 2,2-dimethoxy-1,2-diphenylethan-1-one (registered trademark "IRGACURE 651," manufactured by Ciba Specialty Chemicals Co., Ltd.) and exposed to ultraviolet ray in a nitrogen atmosphere to effect partial photo polymerization to increase the viscosity to prepare syrup containing a prepolymer.

Then, 0.2 parts of trimethylolpropane triacrylate as a polyfunctional monomer was added to the partially polymerized syrup and agitated. Thereafter, the resultant mixture was coated on a release-treated PET film (thickness 38 $\mu$m) to a thickness after curing of 300 $\mu$m. On this was superimposed a release-treated PET film (thickness 38 $\mu$m) as a separator to cover it, ultraviolet ray (illuminance 170 mW/cm$^2$, light amount 2,500 mJ/cm$^2$) from a high-pressure mercury lamp was irradiated onto the covered PET film to cure the coating to form an intermediate layer on the PET film. Thereafter, the PET film and the separator were removed to obtain an intermediate layer. The obtained intermediate layer was measured for a gel fraction according to the above-mentioned method, and subjected to dynamic viscoelastic tests to obtain loss tangent (tan$\delta$), and to tensile tests to obtain initial elastic modulus. The results obtained are shown in Table 1.

On a 115-$\mu$m-thick ethylene/vinyl acetate copolymer (EVA) film as a base layer was provided an intermediate layer (300 $\mu$m) in the same manner as described above.

Then, a blend of 78 parts of ethyl acrylate, 100 parts of butyl acrylate, and 40 parts of 2-hydroxyethyl acrylate was copolymerized in a toluene solution to obtain an acrylic-based copolymer having a number-average molecular weight of 300,000. The acrylic-based copolymer was subjected to addition reaction with 43 parts of 2-methacryloyloxyethyl isocyanate to introduce carbon-carbon double bonds in the intramolecular side chains of the polymer. Further, a UV-curing type pressure-sensitive adhesive blended with 1 part of a polyisocyanate-based crosslinking agent and 3 parts of an acetophenone-based photo polymerization initiator was coated on a surface of the intermediate layer formed on the base to a thickness of 30 $\mu$m to form a pressure-sensitive adhesive layer, thus preparing a pressure-sensitive adhesive sheet having a layer construction of base/intermediate layer/pressure-sensitive adhesive layer.

The obtained pressure-sensitive adhesive sheet was evaluated for cutting sludge and wafer cracks. That is, the obtained pressure-sensitive adhesive sheet was applied to a wafer with a 240-$\mu$m-high bump, and the pressure-sensitive adhesive sheet was cut along the periphery of the wafer and evaluated for cutting sludge. The results obtained are shown in Table 1.

(Example 2)

An intermediate layer was formed in the same manner as that in Example 1 except that 100 parts of lauryl acrylate and 10 parts of acrylic acid were used as the acrylic-based monomers . Also, a pressure-sensitive adhesive sheet having the base, intermediate layer and pressure-sensitive adhesive layer in order was prepared in the same manner as that in Example 1. The intermediate layer had a gel fraction of 71%. The obtained intermediate layer and the pressure-sensitive adhesive sheet were measured and evaluated in the same manner as that in Example 1. The results obtained are shown in Table 1.

(Comparative Example 1)

An intermediate layer was formed in the same manner as that in Example 1 except that 100 parts of butyl acrylate and 10 parts of acrylic acid were used as the acrylic-based monomers. Also, a pressure-sensitive adhesive sheet having the base, intermediate layer and pressure-sensitive adhesive layer in order was prepared in the same manner as that in Example 1. The intermediate layer had a gel fraction of 66%. The obtained intermediate layer and the pressure-sensitive adhesive sheet were measured and evaluated in the same manner as that in Example 1. The results obtained are shown in Table 1.

(Comparative Example 2)

An intermediate layer was formed in the same manner as that in Example 1 except that no functional monomer was used. Also, a pressure-sensitive adhesive sheet having the base, intermediate layer and pressure-sensitive adhesive layer in order was prepared in the same manner as that in Example 1. The intermediate layer had a gel fraction of 1%. The obtained intermediate layer and the pressure-sensitive adhesive sheet were measured and evaluated in the same manner as that in Example 1. The results obtained are shown in Table 1.

(Comparative Example 3)

An intermediate layer was formed in the same manner as that in Example 1 except that 70 parts of butyl acrylate, 30 parts of etyl acrylate and 10 parts of acrylic acid were used as the acrylic-based monomers. Also, a pressure-sensitive adhesive sheet having the base, intermediate layer and pressure-sensitive adhesive layer in order was prepared in the same manner as that in Example 1. The intermediate layer had a gel fraction of 75%. The obtained intermediate layer and the pressure-sensitive adhesive sheet were measured and evaluated in the same manner as that in Example 1. The results obtained are shown in Table 1.

<<Evaluation Tests>>

(1) Evaluation of Cutting Sludge

By using a affixing machine (DR-8500II, manufactured by Nitto Seiki Co. , Ltd.) a pressure-sensitive adhesive sheet was affixed to each of twenty five (25) 6-inch wafers of 625 $\mu$m thick (without bump) on which a 240-$\mu$m-high bump was formed. Then, using a cutter blade heated to 150°C (temperature of the tip of the blade is 60°C), the pressure-sensitive adhesive sheet was cut along the periphery of the wafer. Any one of the 25 wafers was observed of the side surface of the pressure-sensitive adhesive sheet after the cutting on an optical microscope (magnification $\times$100 and $\times$200) and the number of mass of a size of 100 $\mu$m or more (cutting sludge) was counted.

(2) Evaluation of Wafer Cracks

By using a affixing machine (DR-8500II, manufactured by Nitto Seiki Co. , Ltd.) a pressure-sensitive adhesive sheet was affixed to each of twenty five (25) 6-inch wafers of 625 $\mu$m thick (without bump) on which a 240-$\mu$m-high bump was formed. The wafer with the pressure-sensitive adhesive sheet affixed thereto was ground to a thickness of 200 $\mu$m using a silicon wafer grinder manufactured by Disco Co., Ltd. and the number of wafers in which cracks occurred was counted.

Table 1

| | Initial Elastic Modulas (N/mm$^2$) | Loss Tangent (tan$\delta$) | | | Gel Fraction (%) | Cutting Sludge (number) | Wafer Cracks (number) |
|---|---|---|---|---|---|---|---|
| | | 20°C | 45°C | 70°C | | | |
| Ex.1 | 0.15 | 0.54 | 0.49 | 0.55 | 54 | 12 | 0 |
| Ex.2 | 0.25 | 0.86 | 0.53 | 0.45 | 71 | 8 | 0 |
| Com.Ex.1 | 0.36 | 0.37 | 0.31 | 0.38 | 66 | 40 | 0 |
| Com.Ex.2 | 0.04 | 0.58 | 0.47 | 0.45 | 1 | 62 | 0 |
| Com.Ex.3 | 0.72 | 0.43 | 0.45 | 0.48 | 75 | 10 | 3 |

Table 1 indicates that the pressure-sensitive adhesive sheet of Examples 1 and 2 of the present invention generated a smaller number of cutting sludges and when the pressure-sensitive adhesive sheet was used in grinding wafers to a thickness of 200 $\mu$m, none of the wafers showed cracks.

On the other hand, the pressure-sensitive adhesive sheet of Comparative Example 1 that had an intermediate layer whose loss tangent (tan$\delta$) was less than 0.4 and the pressure-sensitive adhesive sheet of Comparative Example 2 that had an intermediate layer whose gel fraction was less than 30% showed a large number of cutting sludges. The pressure-sensitive adhesive sheet of Comparative Example 3 that had an intermediate layer whose initial elastic modulus was greater than 0.5 N/mm$^2$ showed cracks in 3 wafers out of total 25 wafers.

That is, according to the present invention, a pressure-sensitive adhesive sheet is provided which can follow up unevenness on the surface of a semiconductor wafer even when a difference in height of unevenness is large and which generates a smaller amount of cutting sludge of the pressure-sensitive adhesive sheet when the semiconductor wafer is affixed the pressure-sensitive adhesive sheet thereon and cut.

[Industrial Applicability]

The pressure-sensitive adhesive sheets of the present invention can be advantageously used in processing wafers that are used when the backside of wafers is ground or wafers are diced. Further, the pressure-sensitive adhesive sheet of the present invention can be used in a variety of applications in which peeling of the pressure-sensitive adhesive sheet during the use or after the use thereof is involved, for example, as pressure-sensitive adhesive sheet for protecting the surface of articles or for preventing breakage of the articles in the manufacture of high precision processed various industrial components, in particular parts such as semiconductors, circuits, various printed boards, various masks, and lead frames.

[Effects of Invention]

According to the present invention, a pressure-sensitive adhesive sheet can be provided which can follow up unevenness on the surface of an article even when a difference in height of unevenness is large when it is used in processing articles such as semiconductor articles and optical articles and which shows a smaller amount of cutting sludge generated from the side surface of the pressure-sensitive adhesive sheet when the pressure-sensitive adhesive sheet is affixed to the semiconductor wafer and was cut along the periphery the wafer. Further, according to the present invention, there can be provided a method of producing the pressure-sensitive adhesive sheet and a method of processing articles using the pressure-sensitive adhesive sheet.

**Claims**

1. A pressure-sensitive adhesive sheet comprising a base having on one surface thereof an intermediate layer and a pressure-sensitive adhesive sheet in order, wherein the intermediate layer has an initial elastic modulus of 0.5 N/mm$^2$ or less, a loss tangent (tan$\delta$) at 20°C to 70°C of 0.4 or more, and a gel fraction of 30% or more.

2. The pressure-sensitive adhesive sheet as claimed in claim 1, wherein the intermediate layer is formed by irradiating radiation.

3. The pressure-sensitive adhesive sheet as claimed in claim 2, wherein the radiation is at a does of 100 mJ/cm$^2$ or more and 5,000 mJ/cm$^2$ or less.

4. The pressure-sensitive adhesive sheet as claimed in claim 1, wherein the pressure-sensitive adhesive layer is formed by using a radiation curable-type acrylic-based polymer having a carbon-carbon double bond in the molecule thereof.

5. The pressure-sensitive adhesive sheet as claimed in claim 1, wherein the pressure-sensitive adhesive sheet has a ratio (t1/t2) of a thickness of the intermediate layer (t1) and a thickness of the pressure-sensitive adhesive layer (t2) of 0.01 or more and 0.5 or less.

6. The pressure-sensitive adhesive sheet as claimed in claim 1, further comprising a release separator on the pressure-sensitive adhesive layer.

7. The pressure-sensitive adhesive sheet as claimed in claim 1, wherein the pressure-sensitive adhesive sheet is used for holding and/or protecting an article in a process of precision processing semiconductor wafers.

8. The pressure-sensitive adhesive sheet as claimed in claim 1, wherein the intermediate layer comprises an acrylic-based polymer.

9. The pressure-sensitive adhesive sheet as claimed in claim 8, wherein the intermediate layer is formed by irradiating radiation.

10. The pressure-sensitive adhesive sheet as claimed in claim 9, wherein the radiation is at a does of 100 mJ/cm$^2$ or more and 5,000 mJ/cm$^2$ or less.

11. The pressure-sensitive adhesive sheet as claimed in claim 8, wherein the pressure-sensitive adhesive layer is formed by using a radiation curable-type acrylic-based polymer having a carbon-carbon double bond in the molecule thereof.

12. The pressure-sensitive adhesive sheet as claimed in claim 8, wherein the pressure-sensitive adhesive sheet has a ratio (t1/t2) of a thickness of the intermediate layer (t1) and a thickness of the pressure-sensitive adhesive layer (t2) of 0.01 or more and 0.5 or less.

13. The pressure-sensitive adhesive sheet as claimed in claim 8, further comprising a release separator on the pressure-sensitive adhesive layer.

14. The pressure-sensitive adhesive sheet as claimed in claim 8, wherein the pressure-sensitive adhesive sheet is used for holding and/or protecting an article in a process of precision processing semiconductor wafers.

15. A method of producing a pressure-sensitive adhesive sheet, comprising coating a mixture containing a radical polymerizable monomer on one surface of a base, irradiating radiation to the coated mixture to cure it to form an intermediate layer having an initial elastic modulus of 0.5 N/mm$^2$ or less, a loss tangent (tan$\delta$) at 20°C to 70°C of 0.4 or more, and a gel fraction of 30% or more, and forming a pressure-sensitive adhesive layer on the intermediate layer.

16. The method of producing a pressure-sensitive adhesive sheet as claimed in claim 15, wherein the radical polymerizable monomer is an acrylic-based monomer.

17. A method of processing an article, comprising affixing the pressure-sensitive adhesive sheet as claimed in any one of claims 1 or 7, to an article to be precision processed, and then precision processing the article in a held and/or protected state.

# FIG.1

European Patent
Office

**EUROPEAN SEARCH REPORT**

Application Number

EP 06 01 6534

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2005/031861 A1 (MATSUMURA TAKESHI [JP] ET AL) 10 February 2005 (2005-02-10) <br> * claims 1,3,8,9; examples 1-5 * <br> * paragraphs [0001], [0011] * <br> ----- | 1-17 | INV. <br> C09J133/02 <br> C09J7/02 |
| A | JP 2001 203255 A (NITTO DENKO CORP) 27 July 2001 (2001-07-27) <br> * the whole document * <br> ----- | 1-17 | |
| A | JP 2001 240817 A (DAINIPPON INK & CHEMICALS) 4 September 2001 (2001-09-04) <br> * the whole document * <br> ----- | 1-17 | |
| | | | TECHNICAL FIELDS SEARCHED (IPC) <br> C09J |

The present search report has been drawn up for all claims

| Place of search | Date of completion of the search | Examiner |
|---|---|---|
| Munich | 5 January 2007 | Kositza, Matthias |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

    ....................................................................
& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 06 01 6534

This annex lists the patent family members relating to the patent documents cited in the above-mentioned European search report.
The members are as contained in the European Patent Office EDP file on
The European Patent Office is in no way liable for these particulars which are merely given for the purpose of information.

05-01-2007

| Patent document cited in search report | | Publication date | Patent family member(s) | | Publication date |
|---|---|---|---|---|---|
| US 2005031861 | A1 | 10-02-2005 | CN<br>JP<br>KR | 1580168 A<br>2005053998 A<br>20050016168 A | 16-02-2005<br>03-03-2005<br>21-02-2005 |
| JP 2001203255 | A | 27-07-2001 | NONE | | |
| JP 2001240817 | A | 04-09-2001 | NONE | | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 61010242 A
- JP 61260629 A
- JP 2001203255 A